Europäisches Patentamt

(19) European Patent Office

Office européen des brevets

(11) Publication number: **0 448 267 A2**

# (12) EUROPEAN PATENT APPLICATION

(21) Application number: **91302015.2**

(22) Date of filing: **11.03.91**

(51) Int. Cl.⁵: **H04N 17/04**

(30) Priority: **19.03.90 US 495857**
**08.11.90 US 610785**

(43) Date of publication of application:
**25.09.91 Bulletin 91/39**

(84) Designated Contracting States:
**DE FR GB IT NL**

(71) Applicant: **CAPETRONIC USA (HK) INC.**
**2320 Owen Street**
**Santa Clara, California (US)**

(72) Inventor: **Stoorza, Kenneth W.**
**845 Iroquois Way**
**Fremont, California 94539 (US)**
Inventor: **Shih, Chun-Chi**
**No. 5, Lane 85**
**Kung Yuan North Road, Tainan (TW)**
Inventor: **McConnaughey, Joseh M.**
**1016 E. El Camino Real**
**Sunnyvale, California 94087 (US)**
Inventor: **Wilkes, Derek**
**10350 Widdington Close**
**Powell, Ohio 43065 (US)**

(74) Representative: **Beresford, Keith Denis Lewis**
**et al**
**BERESFORD & Co. 2-5 Warwick Court High**
**Holborn**
**London WC1R 5DJ (GB)**

(54) Interactive monitor control system.

㊿ A control interface system governing the operation of an autosync multi-format display monitor. Incoming video signals are measured to discern the attendant timing format. Calibration of the monitor responsive to the video signal is made on selected display parameters defining the structural characteristics of the displayed image. The calibration system is both simplified and highly versatile, permitting quick and accurate calibration of disparate incoming signals.

EP 0 448 267 A2

FIG. 1

# INTERACTIVE MONITOR CONTROL SYSTEM

The present system is generally related to the control of display monitors, and more particularly, to an interactive control system providing an enhanced user interface for controlling an autosync monitor of the type capable of receiving selected video signal transmissions having differing timing formats.

## BACKGROUND OF THE INVENTION

Display monitors are finding increasing application in many diverse uses, including personal computing, telecommunication, graphic design, engineering work stations, and video games. These varying applications are each characterized by system requirements contoured to that particular use. Often, this will involve differing timing formats for the received video signal, thus providing higher image resolution, or color contrast. In this context, the timing format refers to the horizontal scan rate and vertical retrace rate associated with the raster scan imaging process. The specific horizontal line and vertical frame frequency is established for each video format and synchronizes the image information to the display scan. The timing format further dictates the image resolution and quality; that is, higher horizontal line frequency translates to more lines per image frame and more image detail.

For the most part, monitors are dedicated to a single timing format, precluding their use as a display for separately formatted video signals. This often leads to hardware restrictions. For example, numerous timing format standards are now prevalent in the personal computer industry, (e.g., EGA, VGA, etc.) each being incompatible with separately configured hardware. Dedicated monitors of fixed timing formats are not interchangeable between systems, a rigidity that can engender operating inefficiencies and cost increases.

In an effort to address the incompatibility of communicating systems, there is a current drive to develop monitors capable of receiving and displaying multiple video signals having differing timing formats. In co-pending U.S. Patent Application Serial No. 495,857, filed March 19, 1990, an autosync monitor is disclosed, capable of operating with incoming video signals of differing timing formats by applying a microcontroller to integrate a timing format recognition system with the display controller. The teachings of the above-noted patent application are incorporated herein by reference, as if stated in full.

The above microcontroller based monitor involves a great deal of flexibility in configuration and operation by the user. This wealth of configuration choices must be properly presented and systematically controlled. If the monitor control is not carefully contoured in a user-friendly environment, its enhanced flexibility may be unrealized due to the potential complexity of operation and implementation. The following invention is directed to and addresses this issue.

## SUMMARY AND OBJECTS OF THE INVENTION

It is an object of the present invention to provide an enhanced user interface control system to be used in conjunction with an autosync display monitor.

It is another object of the present invention to provide an interactive monitor control system permitting user selection of particular calibration modes and user adjustment of display parameters in each calibration mode.

It is a further object of the present invention to provide an interactive monitor display apparatus capable of retrieving stored timing formats associated with an incoming video signal and adjusting the display parameters affiliated with said timing format. The newly adjusted parameters are then stored in specifically identified memory locations for later use in conjunction with that particular format.

It is yet another object of the present invention to provide a process for sequentially calibrating an autosync display monitor to an incoming video signal.

The above and other objects of the present invention are realized in a specific illustrative monitor control system that operates in concert with an autosync monitor of the type capable of receiving video signal transmissions having differing timing formats. The user interface control system provides one LCD indicator displaying a currently accessed memory location, and a second LCD indicator displaying a currently accessed display parameter undergoing calibration. This user interface incorporates a calibration mode selector for selecting one of six different display parameters for calibration of an extant operating format. Once the calibration mode is selected, the incremental parameter adjustment push buttons resolve the proper adjustment of the selected display parameter.

In accordance with the varying aspects of the present invention, the pre-configured timing formats are set in a designated memory location at the factory which cannot be modified by the end user although the end user can create modified parameters in a separate area of memory designated for this purpose. This function is managed by the microcontroller and is transparent to the user. The pre-configured formats will consume some, but not all of the memory locations in the monitor. Factory configured display parameters are stored in conjunction with the pre-configured timing formats. Although these installed display parameters are user adjustable pursuant to the calibration routine, they are fixed in system memory and always available for "recall" by the user. The remaining monitor memory locations are available for user selected timing formats. These customized timing formats can be entered and stored by the user in memory locations that are otherwise dynamic permitting multiple rewrites. These user-defined formats are calibrated (with attendant storage of the resulting display parameters) in a manner analogous to that applied to the pre-configured formats.

The foregoing features of the present invention may be more fully understood from the following detailed discussion of a specific, illustrative embodiment thereof, presented hereinbelow in conjunction with the accompanying drawings.

## DESCRIPTION OF THE DRAWINGS

FIG. 1 provides a block diagram of the functional elements of the present invention;
FIG. 2 provides a front view of the control panel associated with the present invention;
FIG. 3 provides a diagram of the LCD indicator panel with sample display; and
FIG. 4 provides a logic flow chart depicting the operative logic governing the inventive system.

## DETAILED DESCRIPTION OF THE INVENTION

First briefly in overview, the present invention is directed to a control system for an autosync monitor, and specifically an enhanced user interface for monitor control. The control interface provides an LCD indicator panel and multi-switch control panel linked for operation with select memory cells and controlling logic circuits. Plural timing formats are stored in memory, automatically addressable by the monitor. These timing formats are commonly registered in the monitor at the factory and fixed in memory in a manner precluding accidental erasure by the user. In addition to the memory locations for the factory installed (pre-configured) timing formats, extra memory locations are provided for storage of user-defined timing formats. These user-defined timing format memory locations are non-volatile, but, in fact, can be written over (and previous values discarded) by the user.

Each timing format is associated with quantifiable display parameters. These parameters define the structure of the video image as it is displayed on the monitor screen. More particularly, these parameters include the following six structural attributes of the image on the screen: horizontal size, horizontal position, vertical size, vertical position, pin cushion/barrel, and trapezoid. To the extent additional display parameters are needed for calibration, these may be added and treated as those provided above. The relationship of these parameters to the image can be readily appreciated by their icon representation, as provided in Table I below.

TABLE I

| POSITION | FUNCTION | ICON INDICATION |
|----------|----------|-----------------|
| 1 | Operate | |
| 2 | Horizontal Size (Width) | |
| 3 | Horizontal Position | |
| 4 | Vertical Size (Height) | |
| 5 | Vertical Position | |
| 6 | Pincushion/Barrel | |
| 7 | Trapezoid | |

Each factory installed timing format is stored in conjunction with factory installed display parameters. In addition, monitor memory contains default display parameters for use with new "user-defined" timing formats, essentially as a starting point in calibrating the new format.

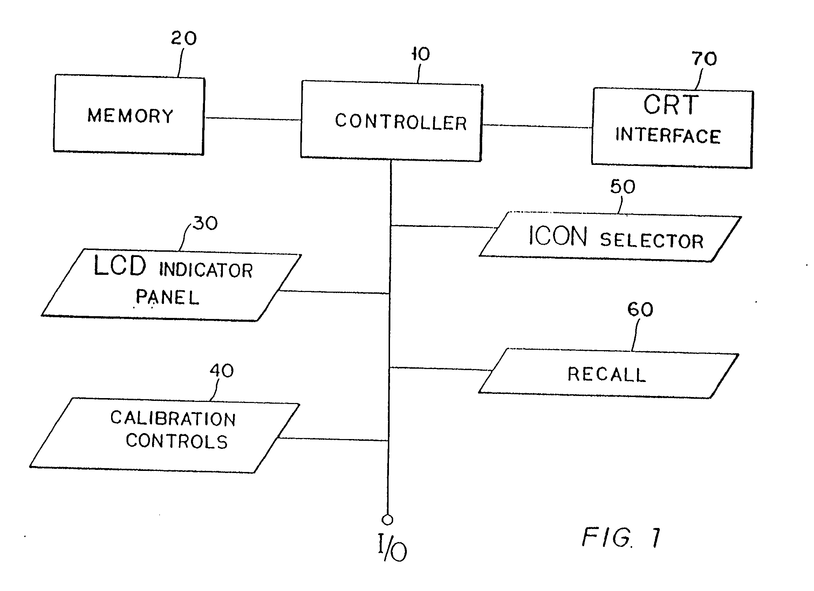

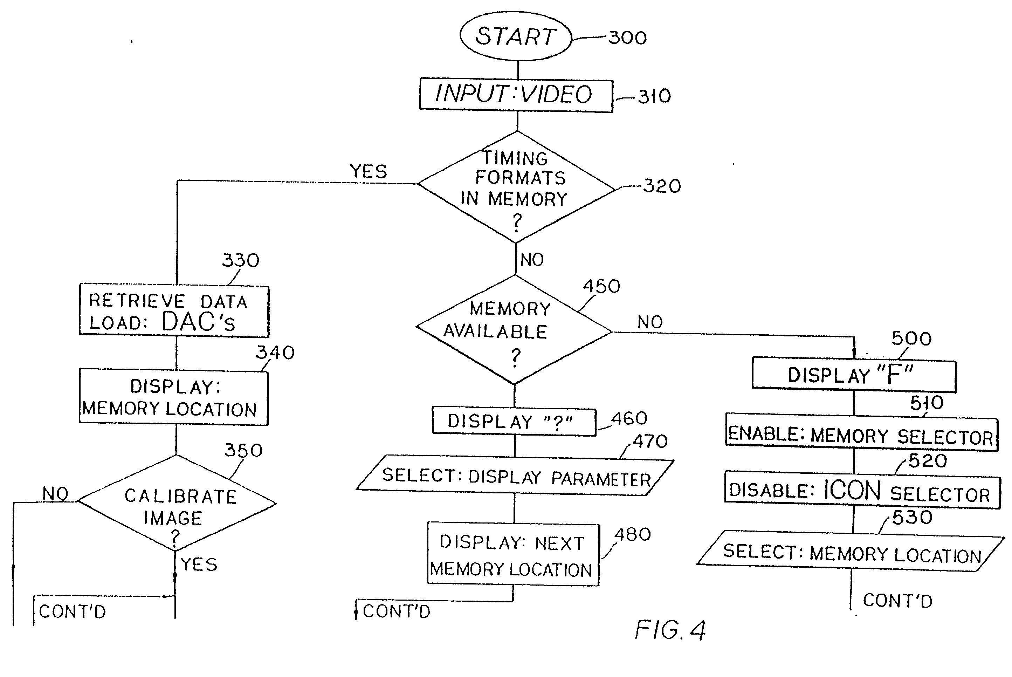

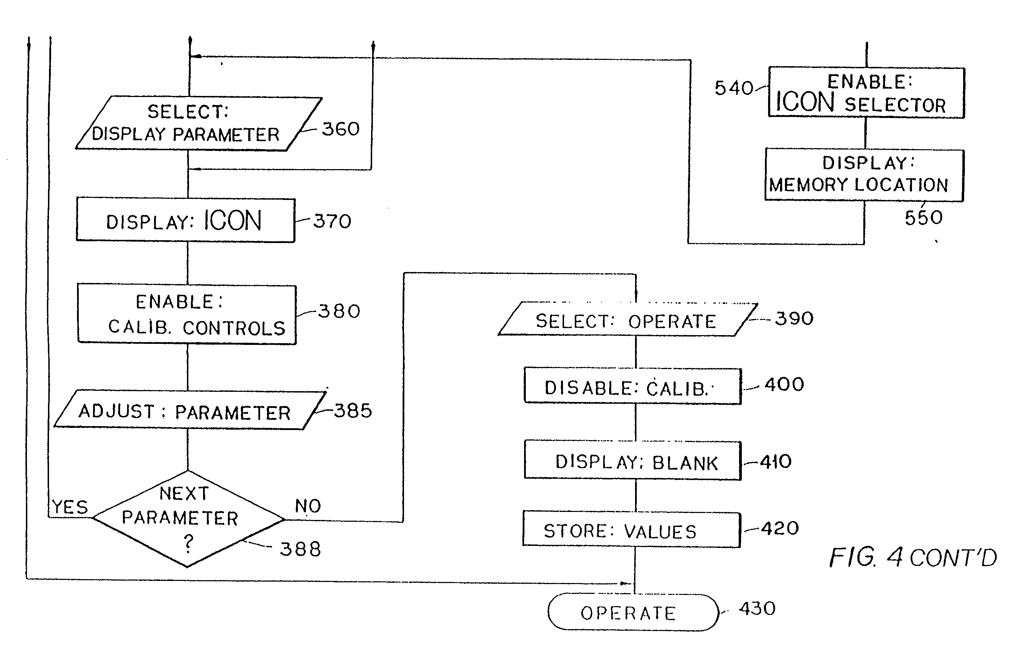

With the above overview in mind, attention is directed to FIG. 1, presenting the block diagram of system elements. Although the system is shown in discrete element form, this is merely for illustrative purposes; as will be readily understood, several of the associated elements in FIG. 1 can be either discrete or integrated without departing from their intended function. Block 10 provides the interface controller logic circuits for directing the system operation pursuant to its pre-programmed instructions. The various commands and data are channeled by controller 10 to their intended destinations. The programmed logic governing this operation is discussed in more detail below in reference to FIG. 4. The controlling program is stored in memory or directly written in fixed format in the logic circuits.

Memory 20 depicts the memory cell locations for the pre-configured timing formats, the user-defined timing formats, and the display parameters associated with each stored timing format. Memory 20 is addressable by and in communication with controller 10. As will be described in more detail below, values are stored and retrieved from the memory cells.

Separately connected to controller 10, via input-output line is LCD indicator panel 30 providing an output of current memory location (i.e., current timing format), and the current display parameter undergoing calibration. Continuing in FIG. 1, icon selector 50 provides the input switch controlling the selected display parameter undergoing calibration. Parameter recall 60 provides the recall input button, and calibration control 40 provides the incremental calibration input signals.

Pursuant to the entered and stored commands and values, the logic circuit communicates to the monitor, interface 70, the controlling timing format and display parameters, thereby controlling the image display.

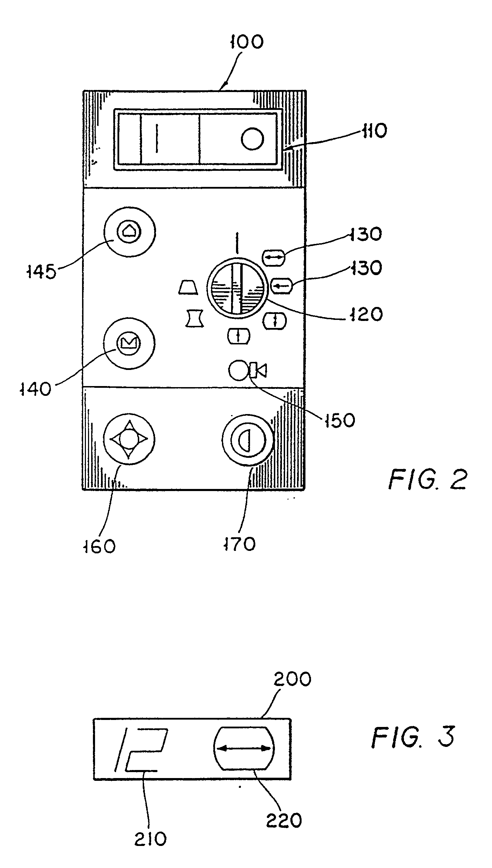

Referring now to FIG. 2. The control panel and associated input mechanisms are depicted from a front view vantage. In this regard, the control panel 100 is affixed to the monitor and linked with the circuitry therein. Conventional switching devices are provided for power 110, brightness adjustment (pop up) 160 and contrast (pop up) 170. The particular control mechanisms germane to the present inventive system are provided in the middle section of panel 100. More particularly, icon selector switch 120 is depicted as a rotary switch with seven stops. The first stop of the rotary switch (located at "twelve o'clock" in FIG. 2) is the "operate" mode, while six remaining stops represent the calibration mode for the monitor. Graphical icons 130 representing each of the display parameters subject to calibration are positioned around the perimeter of the icon selector switch. In this way, the icon selector switch is rotated to each icon, thereby allowing the sequential adjustment of each display parameter during the calibration of the displayed image. Although radially oriented, calibration does not necessarily proceed in a sequential manner; in fact, calibration can occur in any order desired by the user.

Continuing in FIG. 2, calibration control push buttons 140 and 145 are located adjacent to the icon selector switch. These calibration control push buttons are marked with a graphical icon depicting either an upward or downward direction. Calibration of a selected display parameter is accomplished with the calibration control push buttons. For example, the horizontal size (width) of the image can be incrementally expanded, by depressing button 145. In a similar fashion, the width can be reduced by depression of button 140. The calibration control push buttons permit small adjustments by single action depression, or larger scale adjustment by exerting a continuous pressure on the button.

Finally, a recall button 150 is located on panel 100 in a recessed position. The recall button permits the user to erase all of the currently calibrated display parameter values, and substitute the originally stored values from memory. Because such a recall discards current parameter values, the recall button 150 is only accessible through the use of an instrument such as a blunt pen tip. This limits access to minimize accidental activation of the recall button, and the attendant loss of data. The recall button has no effect on user-defined formats because there are no factory set display parameters associated with these formats.

Now, turning to FIG. 3. A simplified display of the LCD indicator is presented. More particularly, this indicator is rectangularly shaped with two side-by-side images. On the left side of the indicator 210, the current memory address location is displayed (e.g., "12"), and on the right side of the indicator 220, the graphical icon representing a display parameter is presented. If a timing format is received having no corresponding values stored in memory, a question mark, "?", appears on the left side of the LCD indicator panel. If all the memory locations are full, an "F" appears on the left side of the LCD panel. During normal operation, i.e., non-calibration, the right side of the LCD panel (i.e., the icon display section) is blank. The left side of the indicator panel is "blank" when the video signal to the monitor has a timing format beyond the monitor's range.

Alternatively, the display of the information described in the proceeding paragraph can be done directly on the CRT screen, thus precluding the need for the separate indicator panel. A direct CRT screen display is accomplished by superimposing the numeric memory location and/or graphical icon into the raster scan of the incoming video signal. This, of course, requires correspondence between the timing formats of the incoming video signal and the graphical icon/memory location image generator. Another embodiment of the invention is without the LCD or on-screen indicator. In this case, the icon is viewed directly on the side panel. The operator counts "clicks" and adjusts out of familiarity or experiments with a given position to see the real time reaction when the calibration controls are activated, thus determining which parameter is under adjustment.

The controlling logic for the monitor control system is presented in flow chart form in FIG. 4. Activation of the system occurs by powering up the monitor, initiating logic sequence "start", at block 300. The monitor control logic circuits discern monitor operation with video input, block 310. Logic proceeds to test 320, wherein the system determines whether the incoming timing format is stored in system memory. A "Yes" response permits the system to retrieve stored display parameters associated with that format, which are thereafter applied to control the monitor display, block 330. Along this branch, the memory address (numerical location) of that particular timing format is provided to the LCD indicator for display to the monitor user, block 340. Logic thereafter pro-

EP 0 448 267 A2

ceeds to test 350, wherein the user decides whether the image alignment is proper ("No" to test 350) or whether the image requires calibration ("Yes" to test 350).

If calibration is deemed necessary, the user enters the calibration loop by rotating the icon selector switch to the first display parameter in the calibration mode, block 360. In response, the system displays the icon associated with that display parameter on the LCD indicator, block 370. The calibration control push buttons are activated for the selected display parameter, block 380. The user then will make the adjustments to the display parameter as required to provide a proper image on the screen 385. This is iteratively pursued for each parameter until the calibration of the image is completed (a "No" to test 388).

Upon completion of the required calibrations of each of the display parameters, the user exits a calibration mode by rotating the icon selector switch to "operate" mode, block 390. The system thereafter reads the discontinuance of the calibration mode disabling the calibration controls, block 400, and rendering blank the alignment icon portion of the LCD indicator, block 410. When this occurs, the display parameters controlling image alignment for that particular timing format are stored by the system for subsequent use, block 420. For this calibration loop, logic has been terminated and the monitor is in its operating mode, block 430.

If in fact the timing format was unrecognized by the display monitor ("No" to test 320), logic would branch to test 450, and determine whether memory existed for storing the new timing format. A positive response to test 450 causes logic to proceed to block 460, and the display of a "?" on the LCD indicator. Thereafter, the user enters the calibration mode for the monitor. block 470. At block 480, the LCD indicator, pursuant to the entry into the calibration mode, displays the next available (presently empty) memory cell location. Logic then shifts back to block 360 and the user, as before, calibrates the system.

Assuming that system memory is full, that is, a "No" response to test 450, logic proceeds to block 500, wherein the system displays an "F" on the LCD indicator for the memory location. The "F" indicates that all memory cells are full. The system thereafter enables "memory selection", via the calibration control, block 510, and disable the icon selector switch, block 520. The user then selects the memory location to be overridden using the calibration controls to scroll between the various memory locations, block 530. After the user selects the memory location for the new calibration values, the icon selector switch is enabled, block 540, and the memory location selected for the new values is presented on the LCD indicator, block 550.

When neither the LCD nor the on-screen display is utilized, memory overwrite is handled by the microcontroller when the memories are full. In this implementation, a "first in, first out" overwrite scheme is employed whereby only user defined memory locations are automatically overwritten.

Continuing logic retraces back to the calibration mode, block 360, and the image display is calibrated as provided above.

EXAMPLE

The monitor control system is provided in conjunction with an autosync monitor responsive to an incoming video signal having a discrete timing format. The monitor is configured so that the LCD indicator panel is provided on the front of the monitor chaise, in close proximity to the CRT screen. The control panel depicted in FIG. 2 and discussed above is provided on the side of the monitor (the user's right-hand side as he faces the monitor screen).

In operation, the monitor is connected to a video signal source and power applied by pressing the power switch on the side of the monitor. After a discrete warm-up period, an image is provided on the monitor screen having certain dimensional characteristics. During the warm-up period, the monitor has read the incoming timing format "signature" and selected timing format values for controlling the image, thereby creating a properly synchronized image on the display.

In this example, the incoming timing format corresponds to a pre-configured format stored in memory location 2; and, therefore, the numeral 2 appears on the left side of the LCD indicator panel. In any event, the displayed image is properly centered but dimensionally too small, i.e., both the vertical and horizontal size of the image are significantly smaller than the screen size.

In response, the monitor user enters the calibration mode by rotating the icon selector switch from its operate mode to the horizontal size position. The icon representing the horizontal size calibration mode is displayed on the LCD indicator panel, informing the operator that he can proceed with the calibration of that horizontal dimension. In response, the user depresses the upper calibration control push button expanding the horizontal size of the image to fill the screen. The user then rotates the icon selector switch until the icon representing vertical size adjustment appears on the LCD indicator panel. The user thereafter depresses the upper calibration control push button expanding the vertical dimension until the image completely fills the display screen. At this point, the image has been properly calibrated and the icon selector switch is rotated back to the "operate" mode, storing the new display parameters and the monitor applied to its intended purpose.

7

The above-described arrangement is merely illustrative of the principles of the present invention. Numerous modifications and adaptations thereof will be readily apparent to those skilled in the art without departing from the spirit and scope of the present invention.

## Claims

1. In combination in a display monitor control system for controlling an autosync monitor of the type capable of receiving video signal transmissions having differing timing formats, wherein said control system comprises:

   a. memory location access means for accessing and retrieving timing format and display parameters associated with said timing format from addressable memory locations;

   b. display parameter indicator means for indicating entry into a calibration mode for the calibration of at least one of said display parameters;

   c. display parameter selector means for selecting one of plural display parameters for calibration;

   d. display parameter incremental adjustment means for adjusting a display parameter selected for calibration; and

   e. display parameter storage means for storing in memory calibrated display parameters associated with said timing format values in said accessed memory location.

2. The monitor control system of claim 1, further comprising recall means for replacing a display parameter undergoing calibration with a stored value corresponding to that display parameter.

3. The monitor control system of claim 1, wherein said memory location access means is responsive to an incoming video signal to said monitor.

4. The monitor control system of claim 3, wherein said incremental adjustment means adjusts a displayed image on said monitor thereby providing real time feedback during adjustment of said display parameter.

5. The monitor control system of claim 1, wherein said display parameters comprise horizontal size, horizontal position, vertical size, vertical position, pincushion, and trapezoid.

6. The monitor control system of claim 1, further comprising memory cells for storing user-defined timing formats.

7. The monitor control system of claim 6, wherein said memory cells associated with said user-defined formats are dynamic.

8. The method of controlling the operation and calibration of an autosync monitor of the type capable of reception of video signals having differing timing formats comprising the steps of:

   a. receiving an incoming video signal and discerning a timing format associated therewith;

   b. accessing a stored timing format and associated display parameters corresponding to said incoming video signal for control of said monitor;

   c. iteratively selecting and adjusting said display parameters to control a structural configuration of an image on said monitor until the image is properly calibrated to the monitor; and

   d. storing said adjusted display parameters associated with said properly calibrated image in a memory location addressable with said incoming timing format.

9. The method of claim 8, wherein a graphical icon of a memory location for said timing format is displayed.

10. The method of claim 9, wherein a graphical icon of a display parameter undergoing calibration is displayed.

11. The method of claim 8, wherein a recall button is provided to re-configure said image with stored display parameter values.

12. The method of claim 8, wherein said autosync monitor stores user-defined timing formats.

13. The method of claim 8, wherein said display parameters comprise horizontal size, horizontal position, vertical size, vertical position, pincushion and trapezoid.

**14.** In combination in an autosync monitor of the type capable of receiving video signals having different timing formats comprising: means for differentiating a generalized timing format associated with an incoming video signal; means responsive to said incoming video signal for selectively accessing stored timing format values from memory; means responsive to said selected stored timing format values for retrieving selected display parameters associated with said timing format; iterative calibration means for adjusting said retrieved display parameters; and means for storing said calibrated display parameters.

**15.** The system of claim 14, wherein said iterative means for calibrating said display parameters includes switching means located on a side panel of said autosync monitor.

**16.** The system of claim 15, further comprising a status indicator means for indicating a currently accessed memory cell location and a display parameter undergoing calibration.

**17.** The system of claim 16, wherein said status indicator means is located on a front panel of said monitor.

**18.** The system of claim 17, wherein said calibration means includes microcontroller means for selectively accessing said memory, and said memory comprises factory set memory cells and user defined memory cells.

**19.** The system of claim 18, wherein said microcontroller means implements a "first in, first out" overwrite scheme to automatically overwrite said user defined memory cells when these cells are otherwise full.

**20.** A video monitor capable of receiving video signals of a plurality of timing formats, select appropriate timing format characteristics for a received video signal, and display an image in accordance with the received video signal, the monitor having means whereby a user may select or adjust the values of one or more parameters of the displayed image which means stores the selected or adjusted values of the one or more parameters in association with data defining a timing format of the received video signal.

FIG. 1

EP 0 448 267 A2

100

110

130

130

120

145

140

150

FIG. 2

160

170

200

FIG. 3

210

220

EP 0 448 267 A2

FIG. 4

SELECT: DISPLAY PARAMETER — 360

DISPLAY: ICON — 370

ENABLE: CALIB. CONTROLS — 380

ADJUST : PARAMETER — 385

NEXT PARAMETER ? — 388

YES  NO

ENABLE: ICON SELECTOR — 540

DISPLAY: MEMORY LOCATION — 550

SELECT: OPERATE — 390

DISABLE: CALIB. — 400

DISPLAY: BLANK — 410

STORE: VALUES — 420

OPERATE — 430

FIG. 4 CONT'D

EP 0 448 267 A2